# EUROPEAN PATENT SPECIFICATION

(11) **EP 4 070 991 B1**
(45) Date of publication and mention of the grant of the patent: **22.05.2024**
(21) Application number: 22166338.8
(22) Date of filing: 01.04.2022
(51) Int. Cl.: B60P 1/16, B60P 1/30, B60P 1/48

(54) **A HOOK-LIFT TRAILER AND A HOOK-LIFT SYSTEM**
HAKENLIFTANHÄNGER UND HAKENLIFTSYSTEM
REMORQUE DE LEVAGE À CROCHET ET SYSTÈME DE LEVAGE À CROCHET

(30) Priority: 09.04.2021 SE 2150442
(43) Date of publication of application: 12.10.2022
(73) Proprietor: Parator Industri AB, 821 24 Bollnäs (SE)
(72) Inventor: NILSSON, Mattias, 235 93 Vällinge (SE)
(74) Representative: Bjerkén Hynell KB

(56) References cited:
- GB-A- 2 077 216
- SE-C2- 507 609
- US-A- 4 934 898

## Description

### TECHNICAL FIELD

The present disclosure relates to the area of hook-lift trailers for hook-lift bodies that are exchangeable by means of a hooklift.

### BACKGROUND

Transport of heavy loads on trailers is strictly regulated with respect to the length and the axle load of the trailer.

When transporting material such as gravel asphalt or sand it is common to use a tipping adapter, sometimes called for tipping board in order to enable control of the material during a tipping procedure. Different tipping adapters can be used depending on the material that is to be transported. One drawback with a tipping adapter is that the total length of the trailer increases with the tipping adapter. Further, a tipping adapter is space consuming, contributes to complicity of the construction of the trailer and decreases the stability of the trailer while tipping.

Efforts have been made to improve trailers in order to fulfil the challenges and the demands on trailers during transports and tipping of heavy loads and several solutions have been implemented. However, although today's solutions work well, there is a need of further improvements in the area of hook-lift trailers.

Document SE 507 609 C2 discloses a prior art hook-lift trailer.

### SUMMARY

It is an object of the present disclosure to overcome, or at least alleviate, at least some of the above-mentioned drawbacks and problems. Thus, an object is to provide an improved hook-lift trailer having conditions for an improved stability and control of the material during a tipping procedure without need of a tipping adapter. A further object is to provide an improved hook-lift system.

According to the invention, the object is achieved by a hook-lift trailer according to claim 1. Thus, the object is achieved by a hook-lift trailer configured for a hook-lift body. The hook-lift trailer is adapted to receive a hook-lift body by means of a hooklift that may be arranged on a truck adapted for connecting of the trailer to the truck. Thus, the hook-lift trailer is not a fixed body trailer where the body needs to be lifted on and off by means of, for example a crane.

The hook-lift trailer comprises:
- at least four axles;
- a frame comprising at least one longitudinal beam, wherein the frame is arranged to enable positioning of the hook-lift body on the frame by means of a hooklift,
- a displacement arrangement arranged to displace the hook-lift body positioned on the frame in a direction parallel with the at least one longitudinal beam to a position on the frame for transport or for tipping of the hook-lift body and
- a tip arrangement arranged to tip the hook-lift body displaced to the position for tipping of the hook-lift body.

The frame of the hook-lift trailer is constructed to enable the hook-lift body to be drawn on the frame by means of the hooklift to position the hook-lift body on the frame, which implies that the hook-lift body can be rolled on the frame during positioning of the hook-lift body. Thus, the frame is reinforced in order to enable positioning of the hook-lift body on the frame by means of a hooklift.

The tip arrangement comprises a tipping frame arranged on the frame of the hook-lift trailer and a tipping cylinder. Thus, the hook-lift body is tipped with the tipping frame when the hook-lift body has been displaced to the position for tipping of the hook-lift body on the tipping frame.

The displacement arrangement is arranged to displace the hook-lift body positioned on the frame in a direction parallel with the at least one longitudinal beam to a position on the frame for transport or for tipping of the hook-lift body. Thus, the hook-lift body can be displaced along the frame between different positions on the frame into a desired position for transport depending on the load to be transported in the hook-lift body. Further, the hook-lift body can be displaced to the position on the frame for tipping of the hook-lift body, in which position the hook-lift body is intended to be tipped.

Because the hook-lift body can be displaced to the position on the frame for tipping of the hook-lift body there is no need for a tipping adapter that otherwise is needed in known trailers without possibility for displacing of the hook-lift body along the frame of the trailer. Consequently the above mentioned object is achieved.

The hook-lift trailer comprises a positioning means arranged to position the hook-lift body in the position for tipping of the hook-lift body. The positioning means helps to position the hook-lift body correctly in a predefined position on the frame for tipping of the hook-lift body. The positioning means may be arranged as a mechanical stop for the hook-lift body and/or may be an electric or magnetic device. Thus, an improved hook-lift trailer is provided having conditions for improved positioning of the hook-lift body on the hook-lift trailer in the position for tipping of the hook-lift body.

Optionally, the positioning means comprises a tipping position sensor. The sensor can detect the desired position of the hook-lift body on the frame for tipping, which facilitates displacement of the hook-lift body into the tipping position.

Optionally, the tipping position sensor is arranged to communicate with at least the displacement arrangement. Thus, a communication signal can be sent from the tipping position sensor to the displacement arrangement when the hook-lift body has been displaced to the position for tipping of the hook-lift body, causing the displacement arrangement to stop a further displacement of the hook-lift body. The communication may be by wire or wireless. Thereby, a yet improved hook-lift trailer is provided with improved functionality regarding displacing of the hook-lift body into the tipping position. Further, the signal from the tipping position sensor can be used to prevent displacement of the hook-lift body during a tipping procedure of the hook-lift body.

The position on the frame for tipping of the hook-lift body is defined at an end edge of the frame. Thus, a material in the hook-lift body may be unloaded in a controllable manner with reduced risks of damaging the frame of the hook-lift trailer. Thus, a yet improved hook-lift trailer is provided.

Optionally, the displacement arrangement comprises a hydraulic system. Thus, a simple and robust displacement arrangement is provided.

According to a second aspect of the invention, the object is achieved by a hook-lift system according to claim 5.

Thus, the object is achieved by a hook-lift system comprising a hook-lift trailer according to any of the embodiments presented herein and comprising a hook-lift body.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a hook-lift truck with a hook-lift and a hook-lift system with a hook-lift trailer and a hook-lift body during positioning on the hook-lift trailer,
Fig. 2 illustrates the hook-lift truck with the hook-lift system illustrated in Fig. 1 where the hook-lift body is positioned for transport,
Fig. 3 illustrates the hook-lift truck with the hook-lift system illustrated in Fig. 1 and Fig. 2 where the hook-lift body has been displaced to a position for tipping of the hook-lift body,
Fig. 4 illustrates the hook-lift truck with the hook-lift system illustrated in Fig. 1 to Fig. 3 where the hook-lift body has been tipped,
Fig. 5 illustrates the hook-lift truck with the hook-lift trailer illustrated in Fig. 1 to Fig. 4, in Fig. 5 a longer hook-lift body has been positioned on the hook-lift trailer in a position for transport,
Fig. 6 illustrates the hook-lift truck with the hook-lift trailer illustrated in Fig. 1 to Fig. 5, where the longer hook-lift body illustrated in Fig. 5 has been tipped,
Fig. 7 is an exploded view of the hook-lift system illustrated in Fig. 1 to Fig. 4, where a displacement arrangement is illustrated, and
Fig. 8 illustrates schematically the displacement arrangement illustrated in Fig. 7 connected to a frame of the hook-lift trailer illustrated in Fig. 1 to Fig. 7.

### DETAILED DESCRIPTION

Aspects of the present invention will now be described more fully. Like numbers refer to like elements throughout. Well-known functions or constructions will not necessarily be described in detail for brevity and/or clarity.

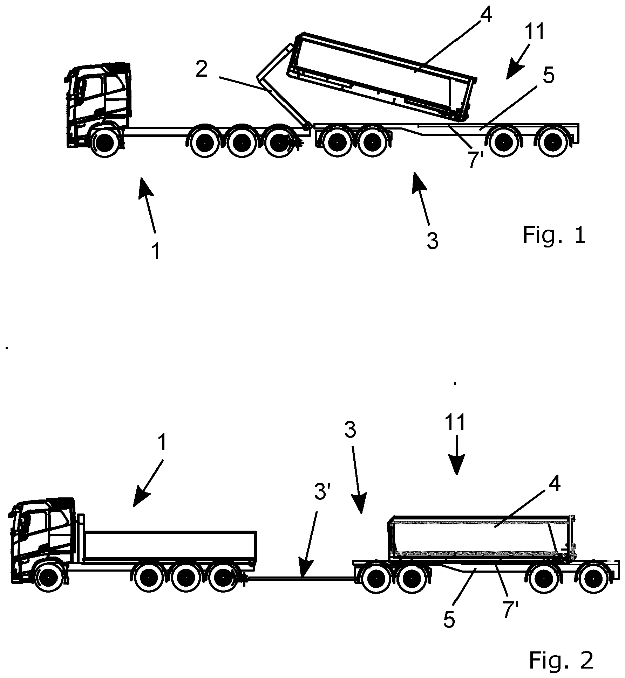

**Fig. 1** to **Fig. 4** illustrate a hook-lift truck 1 with a hooklift 2 and a hook-lift system 11 connected to the hook-lift truck 1. The hook-lift system 11 comprises a hook-lift trailer 3 and a hook-lift body 4. The hook-lift trailer 3 is configured for the hook-lift body 4, which means that the hook-lift trailer 3 is adapted to receive the hook-lift body 4 that can be positioned on the hook-lift trailer 3 by means of the hook-lift 2.

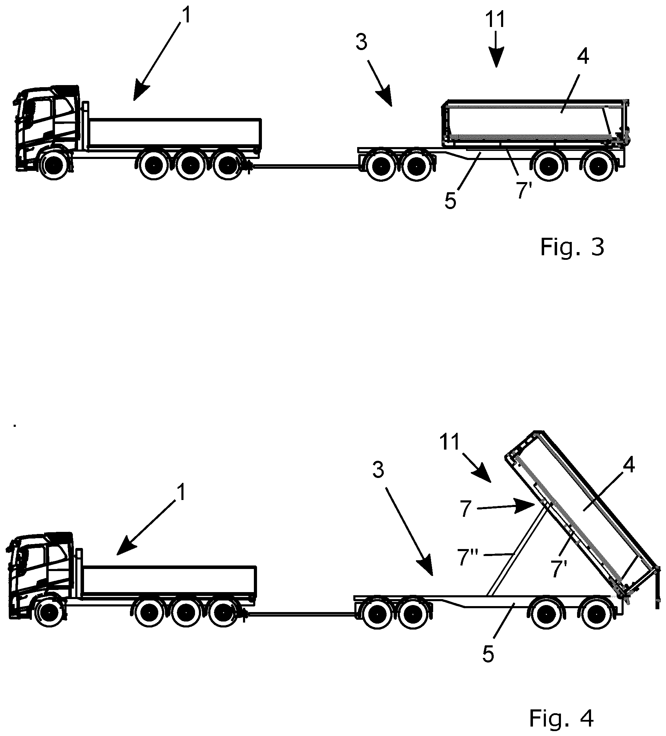

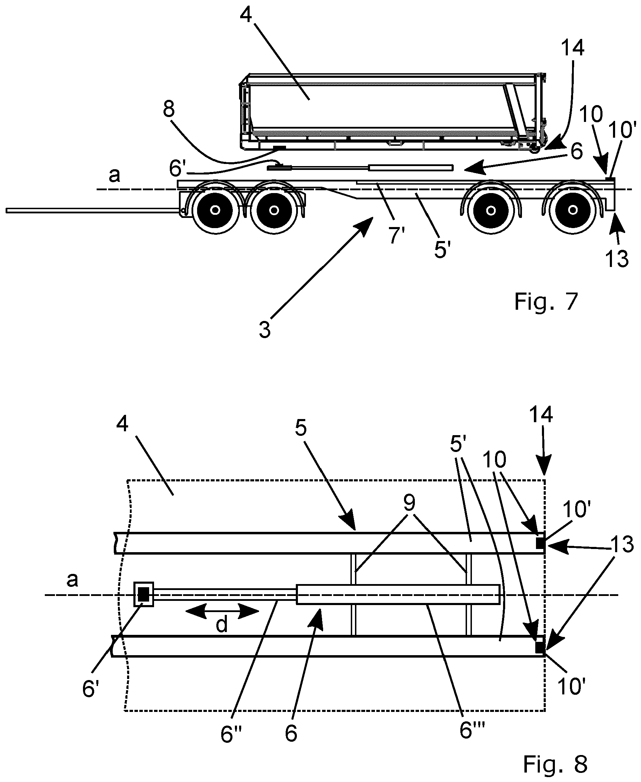

According to the embodiments in **Fig. 1****,** the hook-lift body 4 is illustrated during positioning on the hook-lift trailer 3 by means of the hook-lift 2. According to the embodiments in **Fig. 2****,** the hook-lift body 4 has been displaced to a position for transport. According to the embodiments in **Fig. 3****,** the hook-lift body 4 has been displaced to a position for tipping of the hook-lift body 4. The hook-lift body 4 is displaced by means of the displacement arrangement 6 illustrated in details in Fig. 7 and Fig. 8. According to the embodiments in **Fig. 4****,** the hook-lift body 4 has been tipped in order to empty the hook-lift body 4 from the material being transported in the hook-lift body 4. The hook-lift body 4 is tipped by means of a tip arrangement 7 comprising a tipping frame 7' and a tipping cylinder 7". The hook-lift body 4 is positioned on the tipping frame 7' before a tipping procedure starts. The hook-lift body 4 is then tipped together with the tipping frame 7'. The tipping arrangement 7 may be a hydraulic tipping arrangement known in the art and therefore not described in details herein.

The hook-lift trailer 3 comprises a frame 5 comprising at least one longitudinal beam 5' (illustrated in details in Fig. 8), wherein the frame 5 is arranged to enable positioning of the hook-lift body 4 on the frame 5 by means of the hooklift 2. The frame 5 is arranged such that the hook-lift body 4 can be rolled on the frame 5 when the hooklift 2 is positioning the hook-lift body 4 on the hook-lift trailer 3. Further, the hook-lift trailer 3 comprises a displacement arrangement 6 (illustrated in details in Fig. 7 and Fig. 8) arranged to displace the hook-lift body 4 positioned on the frame 5 in a direction d. The direction d is parallel with the at least one longitudinal beam 5'. The displacement arrangement 6 is arranged to displace the hook-lift body 4 to a position for transport (Fig. 2) or for tipping (Fig. 3). The direction d is parallel with an extension axis a of the frame 5.

The hook-lift trailer 3 comprises a tip arrangement 7 arranged to tip the hook-lift body 4 after the hook-lift body 4 has been displaced to the position for tipping of the hook-lift body 4, as illustrated in Fig. 3. The tip arrangement 7 arrangement comprises a tipping frame 7' arranged on the frame 5 of the hook-lift trailer 3 and a tipping cylinder 7", which may be a hydraulic tipping cylinder driven by means of a hydraulic system (not shown herein). According to the embodiments herein, the hook-lift trailer 3 comprises four axles 12, however, according to an unclaimed embodiment, the hook-lift trailer may comprise, for example at least three axles 12

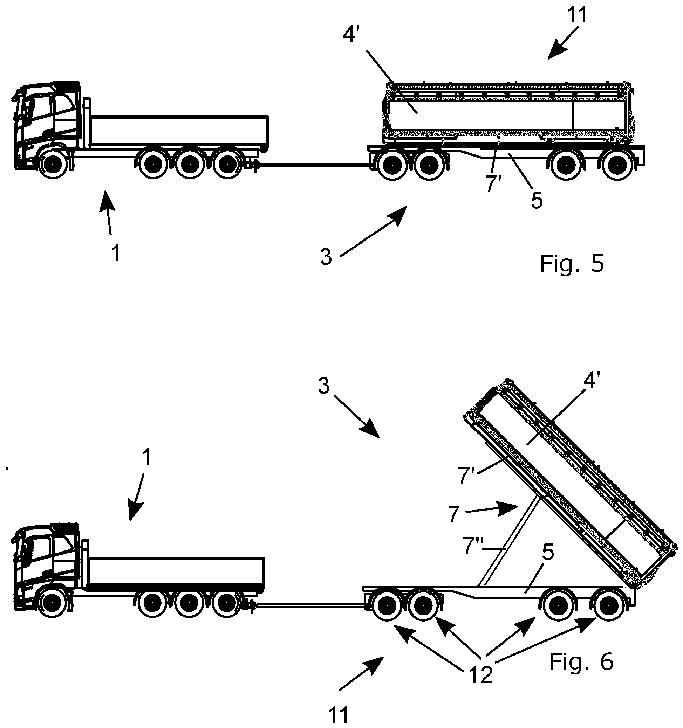

**Fig. 5** and **Fig. 6** illustrate the hook-lift truck 1 with the hook-lift trailer 3 illustrated in Fig. 1 to Fig. 4. According to the embodiments in Fig. 5 and Fig. 6, a longer hook-lift body 4', which is longer than the hook-lift body 4 illustrated in Fig. 1 to Fig. 4, has been positioned on the hook-lift trailer 3. According to the embodiments in Fig. 5, the longer hook-lift body 4' has been positioned in the middle of the hook-lift trailer 3, being a position for transport. According to the embodiments in Fig. 6, the longer hook-lift body 4' has been tipped by means of the tip arrangement 7. Thus, also longer hook-lift bodies that hook-lift body 4 can be displaced by means of the displacement arrangement 6

**Fig. 7** is an exploded view of a hook-lift system 11 illustrated in Fig. 1 to Fig. 6 with a displacement arrangement 6 arranged to displace the hook-lift body 4 positioned on the hook-lift trailer 3. The displacement arrangement 6 comprises a connection part 6' arranged to cooperate with a corresponding connection element 8 arranged on the hook-lift body 4 to connect the hook-lift body 4 to the displacement arrangement 6. Thus, the connection part 6' may be arranged with a protrusion arranged to be inserted into the connection element 8 or vice versa.

The hook-lift trailer 3 may comprise a positioning means 10 arranged to position the hook-lift body in the position for tipping of the hook-lift body 4. The positioning means 10 may be arranged as a mechanical stop for the hook-lift body 4 and/or may be an electric or magnetic device. Thus, positioning of the hook-lift body 4 in the position for tipping is facilitated by the positioning means 10. The positioning means 10 may be arranged at end edge 13 of the frame 5. The hook-lift body 4 may be locked in the position for tipping by means of the positioning means 10.

The positioning means 10 may comprise a tipping position sensor 10', which may be an optical sensor or an inductive sensor or any other suitable kind of sensor. According to the embodiments in Fig. 8, two tipping position sensors 10' have been arranged at each longitudinal beam 5'. The tipping position sensor 10' is arranged to communicate with at least the displacement arrangement 6'. Thus, a communication signal can be sent from the tipping position sensor 10' to at least the displacement arrangement 6 when the hook-lift body 4 has been displaced to the position for tipping causing the displacement arrangement 6 to stop further displacement of the hook-lift body 4. Thus, an improved precision during positioning of the hook-lift body 4 in the position for tipping can be achieved. Further, the signal from the tipping position sensor 10' can be used to prevent displacement of the hook-lift body 4 during a tipping procedure of the hook-lift body 4.

**Fig. 8** illustrates schematically the displacement arrangement 6 illustrated in Fig. 7 connected to the frame 5 of the hook-lift trailer 3 illustrated in Fig. 1 to Fig. 7. According to the embodiments in Fig. 8, the frame 5 comprises two beams 5'. Further, according to the embodiments in Fig. 8, the displacement arrangement 6 comprises one piston arrangement 6", 6'" arranged centrally between the beams 5' along the extension axis a. Preferably, the piston arrangement 6", 6‴ is connected to a hydraulic system (not shown) to be operated hydraulically. According to some embodiments, the displacement arrangement 6 may comprise two piston arrangements 6", 6‴. According to the embodiments illustrated in Fig. 8, the piston arrangement 6", 6‴ is fastened to the beams 5' by means of fastening members 9, such as, for example, metal pieces fastened by welding.

According to the embodiments illustrated in Fig. 8, two tipping position sensors 10' have been arranged at an end edge 13 of the frame 5. Thus, the position on the frame (5) for tipping of the hook-lift body 4 is defined at an end edge 13 of the frame 5.

According to some embodiments the tipping position sensor 10' may be arranged to detect a body edge 14 in order to control the hook-lift body 4 during displacement into the position for tipping.

## Claims

1. A hook-lift trailer (3) configured for a hook-lift body (4), wherein the hook-lift trailer (3) comprises:
- at least four axles (12),
- a frame (5) comprising at least one longitudinal beam (5'), wherein the frame (5) is arranged to enable positioning of the hook-lift body (4) on the frame (5) by means of a hooklift (2),
- a displacement arrangement (6) arranged to displace the hook-lift body (4) positioned on the frame (5) in a direction parallel with the at least one longitudinal beam (5') to a position on the frame for transport or for tipping of the hook-lift body (4), wherein the displacement arrangement (6) comprises a connection part (6') arranged to cooperate with a corresponding connection element (8) arranged on the hook-lift body (4) to connect the hook-lift body (4) to the displacement arrangement (6) to displace the hook-lift body (4) along the frame (5) between different positions on the frame (5) into a desired position for transport depending on the load to be transported in the hook-lift body (4) and to displace the hook-lift body (4) to the position on the frame for tipping of the hook-lift body (4), wherein the position for transport differs from the position for tipping,
- a positioning means (10) arranged to position the hook-lift body (4) in the position for tipping of the hook-lift body (4), wherein the positioning means (10) is arranged at an end edge (13) of the frame (5) to position the hook-lift body (4) at the end edge (13) for tipping of the hook-lift body (4) without a need of a tipping adapter, and
- a tip arrangement (7) arranged to tip the hook-lift body (4) displaced to the position for tipping of the hook-lift body (4).

2. The hook-lift trailer (3) according to claim 1, wherein the positioning means (10) comprises a tipping position sensor (10').

3. The hook-lift trailer (3) according to claim 2, wherein the tipping position sensor (10') is arranged to communicate with at least the displacement arrangement (6).

4. The hook-lift trailer (3) according to any of claims 1 to 3, wherein the displacement arrangement (6) comprises a hydraulic system.

5. A hook-lift system (11) comprising a hook-lift trailer (3) according to any of claims 1 to 4 and a hook-lift body (4, 4').

## Patentansprüche

1. Hakenliftanhänger (3), der für einen Hakenliftkörper (4) konfiguriert ist, wobei der Hakenliftanhänger (3) umfasst:
- mindestens vier Achsen (12),
- einen Rahmen (5), der mindestens einen Längsträger (5') umfasst, wobei der Rahmen (5) angeordnet ist, um das Positionieren des Hakenliftkörpers (4) auf dem Rahmen (5) mittels eines Hakenlifts (2) zu ermöglichen,
- eine Verschiebungsanordnung (6), die angeordnet ist, um den Hakenliftkörper (4), der auf dem Rahmen (5) positioniert ist, in einer Richtung parallel zu dem mindestens einen Längsträger (5') in eine Position auf dem Rahmen zum Transport oder zum Kippen des Hakenliftkörpers (4) zu verschieben, wobei die Verschiebungsanordnung (6) ein Verbindungsteil (6') umfasst, das angeordnet ist, um mit einem entsprechenden Verbindungselement (8) zusammenzuwirken, das auf dem Hakenliftkörper (4) angeordnet ist, um den Hakenliftkörper (4) mit der Verschiebungsanordnung (6) zu verbinden, um den Hakenliftkörper (4) entlang des Rahmens (5) zwischen verschiedenen Positionen auf dem Rahmen (5) in eine gewünschte Position zum Transport in Abhängigkeit von der Last, die in dem Hakenliftkörper (4) transportiert werden soll, zu verschieben und um den Hakenliftkörper (4) in die Position auf dem Rahmen zum Kippen des Hakenliftkörpers (4) zu verschieben, wobei sich die Position zum Transport von der Position zum Kippen unterscheidet,
- ein Positionierungsmittel (10), das angeordnet ist, um den Hakenliftkörper (4) in der Position zum Kippen des Hakenliftkörpers (4) zu positionieren, wobei das Positionierungsmittel (10) an einem Endrand (13) des Rahmens (5) angeordnet ist, um den Hakenliftkörper (4) an dem Endrand (13) zum Kippen des Hakenliftkörpers (4) zu positionieren, ohne dass ein Kippadapter erforderlich ist, und
- eine Kippanordnung (7), die angeordnet ist, um den Hakenliftkörper (4), der in die Position zum Kippen des Hakenliftkörpers (4) verschoben ist, zu kippen.

2. Hakenliftanhänger (3) nach Anspruch 1, wobei das Positionierungsmittel (10) einen Kipppositionssensor (10') umfasst.

3. Hakenliftanhänger (3) nach Anspruch 2, wobei der Kipppositionssensor (10') angeordnet ist, um mit mindestens der Verschiebungsanordnung (6) zu kommunizieren.

4. Hakenliftanhänger (3) nach einem der Ansprüche 1 bis 3, wobei die Verschiebungsanordnung (6) ein Hydrauliksystem umfasst.

5. Hakenliftsystem (11), umfassend einen Hakenliftanhänger (3) nach einem der Ansprüche 1 bis 4 und einen Hakenliftkörper (4, 4').

## Revendications

1. Remorque à système à levage à crochet (3) configurée pour un corps de système à levage à crochet (4), dans laquelle la remorque à système à levage à crochet (3) comprend :
- au moins quatre essieux (12),
- un châssis (5) comprenant au moins une poutre longitudinale (5'), dans laquelle le châssis (5) est agencé pour permettre le positionnement du corps de système à levage à crochet (4) sur le châssis (5) au moyen d'un système de levage à crochet (2),
- un agencement de déplacement (6) agencé pour déplacer le corps de système à levage à crochet (4) positionné sur le châssis (5) dans une direction parallèle à l'au moins une poutre longitudinale (5') vers une position sur le châssis pour le transport ou pour le basculement du corps de système à levage à crochet (4), dans laquelle l'agencement de déplacement (6) comprend une partie de raccordement (6') agencée pour coopérer avec un élément de raccordement (8) correspondant agencé sur le corps de système à levage à crochet (4) pour raccorder le corps de système à levage à crochet (4) à l'agencement de déplacement (6) pour déplacer le corps de système à levage à crochet (4) le long du châssis (5) entre différentes positions sur le châssis (5) dans une position souhaitée pour le transport en fonction de la charge à transporter dans le corps de système à levage à crochet (4) et pour déplacer le corps de système à levage à crochet (4) vers la position sur le châssis pour le basculement du corps de système à levage à crochet (4), dans laquelle la position pour le transport diffère de la position pour le basculement,
- un moyen de positionnement (10) agencé pour positionner le corps de système à levage à crochet (4) dans la position pour le basculement du corps de système à levage à crochet (4), dans laquelle le moyen de positionnement (10) est agencé au niveau d'un bord d'extrémité (13) du châssis (5) pour positionner le corps de système à levage à crochet (4) au niveau du bord d'extrémité (13) pour le basculement du corps de système à levage à crochet (4) sans qu'un adaptateur de basculement soit nécessaire, et
- un agencement de pointe (7) agencé pour basculer le corps de système à levage à crochet (4) déplacé vers la position pour le basculement du corps de système à levage à crochet (4).

2. Remorque à système à levage à crochet (3) selon la revendication 1, dans laquelle le moyen de positionnement (10) comprend un capteur de position de basculement (10') .

3. Remorque à système à levage à crochet (3) selon la revendication 2, dans laquelle le capteur de position de basculement (10') est agencé pour communiquer avec au moins l'agencement de déplacement (6).

4. Remorque à système à levage à crochet (3) selon l'une quelconque des revendications 1 à 3, dans laquelle l'agencement de déplacement (6) comprend un système hydraulique.

5. Système à levage à crochet (11) comprenant une remorque à système à levage à crochet (3) selon l'une quelconque des revendications 1 à 4 et un corps de système à levage à crochet (4, 4').
